Europäisches Patentamt

European Patent Office

Office européen des brevets

(11) Publication number: **0 122 532**
**B1**

(12) **EUROPEAN PATENT SPECIFICATION**

(45) Date of publication of patent specification: **19.10.88**

(21) Application number: **84103628.8**

(22) Date of filing: **12.08.81**

(60) Publication number of the earlier application in accordance with Art. 76 EPC: **0 045 973**

(51) Int. Cl.⁴: **F 16 F 9/34**

(54) **Shock absorber.**

(30) Priority: **13.08.80 JP 114598/80**
**14.08.80 JP 115598/80**
**14.08.80 JP 115599/80**

(43) Date of publication of application:
**24.10.84 Bulletin 84/43**

(45) Publication of the grant of the patent:
**19.10.88 Bulletin 88/42**

(84) Designated Contracting States:
**DE FR GB**

(56) References cited:
**DE-C- 697 799**
**FR-A-2 425 585**
**GB-A-2 033 534**
**GB-A-2 044 882**
**US-A-3 220 517**
**US-A-3 672 474**
**US-A-4 159 091**

(73) Proprietor: **NISSAN MOTOR CO., LTD.**
**No.2, Takara-cho, Kanagawa-ku**
**Yokohama-shi Kanagawa-ken 221 (JP)**

(72) Inventor: **Fukushima, Naoto**
**17-15, Ogigayatsu 2-chome**
**Fujisawa-shi Kanagawa-ken (JP)**
Inventor: **Iwata, Kazuroh**
**1136-331, Imaizumi**
**Kamakura-shi Kanagawa-ken (JP)**
Inventor: **Hidaka, Kunihiko**
**47-13, Sugita 8-chome Isogo-ku**
**Yokohama-shi Kanagawa-ken (JP)**

(74) Representative: **Patentanwälte TER MEER -**
**MÜLLER - STEINMEISTER**
**Mauerkircherstrasse 45**
**D-8000 München 80 (DE)**

EP 0 122 532 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a double-action vortex flow shock absorber comprising a hollow cylinder filled with a working fluid, a piston including upper and lower members disposed within said cylinder for defining therein first and second chambers, said piston further defining first and second vortex chambers therein, said first and second vortex chambers being in communication with each other via at least one first passage and one second passage, said second passage being adapted to produce a vortex pattern fluid flow in said second vortex chamber while the fluid flows in first direction from said first chamber to said second chamber, said first passage being adapted to produce a vortex pattern fluid flow in the first vortex chamber while the fluid flows in said second direction, said first passage and said second passage being connected by a recess on the periphery of the piston, said first vortex chamber being in communication with said first chamber via a third passage and said second vortex chamber being in communication with said second chamber via a fourth passage.

In case of the shock absorber being applied to the suspension of an automotive vehicle, it is preferable to provide a relatively small absorbing force against relatively small piston stroke, even though piston speed is relatively high, for riding comfort. On the other hand, for a relatively large piston stroke, a relatively large absorbing force is required for vehicle stability. Therefore, a shock absorber for use with the automotive vehicle suspension is required to vary the absorbing force against shock depending not only on piston speed but also on piston stroke.

In general, the piston stroke corresponding to various vehicle driving conditions are approximated as follows:

| | |
|---|---|
| abrupt turning | 40 mm |
| rapid acceleration | 50 mm |
| lane change | 35 mm |
| crossing bump | 3 mm |
| smooth road | 2 mm |
| rough road | 14 mm |

As understood hereabove, when the vehicle is turned abruptly, rapidly accelerated, or changes lanes, a significant absorbing force is required for adequate driving stability. On the other hand, when the vehicle is driven over a slight bump, on a smooth road, or on a relatively rough road, a significant absorbing force is not required since the vehicle is easily maintained in a stable condition. In the latter driving condition, it is important to provide minimal absorbing force for riding comfort.

EP—A—0 045 954 (published 17.02.1982) discloses a shock absorber as defined in the opening paragraph.

A similar construction is known from the US—A—3 220 517.

In these conventional shock absorbers, there is provided a rigid partition between the two vortex chambers formed in the piston.

It is the principle object of the invention to provide a vortex shock absorber with variable absorbing force depending not only on the piston speed but also on the piston stroke, and more particularly a shock absorber providing a relatively small absorbing force against relatively small piston stroke and a relatively large absorbing force in case of a relatively large piston stroke.

To accomplish the above mentioned and other objects, there is provided a shock absorber, according to the invention, having an elastically deformable partitioning member disposed within an internal space of said piston for defining therein said first and second vortex chambers, said partitioning member being effective on small piston strokes to absorb fluid pressure differences generated between the first and second vortex chambers.

The present invention will be more fully understood from the detailed description given herebelow and from the accompanying drawings of the embodiments of the present invention, which, however, should not be understood as limitative to the invention but are for elucidation and explanation only.

In the drawings:

Figure 1 is a longitudinal cut-away view of a hydraulic shock absorber in accordance with the present invention;

Figure 2 is a longitudinal cross-section of the piston of the shock absorber shown in Figure 1;

Figure 3 is a transverse cross-section of the piston of Figure 2 taken along line 3—3 of Figure 2;

Figure 4 is a graph showing the relationship between the absorbing force and piston speed of the shock absorber of Figures 1 to 3;

Figure 5 is a longitudinal cross-section of a modified piston;

Figure 6 is a transverse cross-section of the piston of Figure 5 taken along line 6—6 of Figure 5;

Figure 7 is an enlarged partial cross-section showing detail of the relief valve employed in the piston of Figure 5; and

Figure 8 is a graph showing the absorbing force variation with respect to variation of the speed of the piston, wherein the hatched areas show the working range of a shock absorber with the piston of Figure 5.

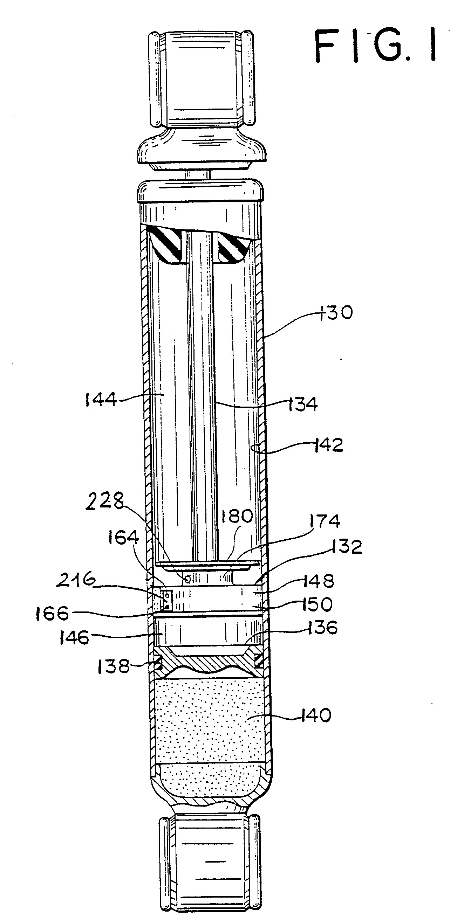

Referring now to the drawings, particularly to Figure 1, there is illustrated a shock absorber according to the present invention. The shock absorber comprises a hollow cylinder 130 and a piston 132 movably disposed within a cylinder 130. The piston 132 is secured on the lower end of a piston rod 134 which has an upper end extending out of the cylinder 130 and attached to a vehicle body chassis (not shown). On the other hand, the lower end of the cylinder 130 is attached to a wheel axle (not shown). A free piston 136 with annular sealing ring 138 is also movably disposed within the tube to define within the cylinder 130 a pneumatic chamber 140. A chamber 142 defined within the cylinder tube 130 and being filled with a working fluid is divided into upper and lower chambers 144 and 146 respectively by the piston.

The piston 132 comprises upper and lower predominantly disc-shaped members 148 and 150, the upper member being formed with a horizontally-orientated circular recess not shown in Figure 1. The upper member 148 is formed with a recess 216 on the circumference thereof. Vortex passages 164 and 166 are defined in the piston 132 such that the outer ends of the vortex passages 164 and 166 open toward the recess 216 and the inner ends thereof open toward the inner circular recess. The inner ends of the vortex passages 164 and 166 are directed along the circumference of the inner recess.

The upper and lower members 148 and 150 are secured to another. For securing the upper and lower members 148, 150, it is possible to use any suitable process to detachably or fixedly couple them.

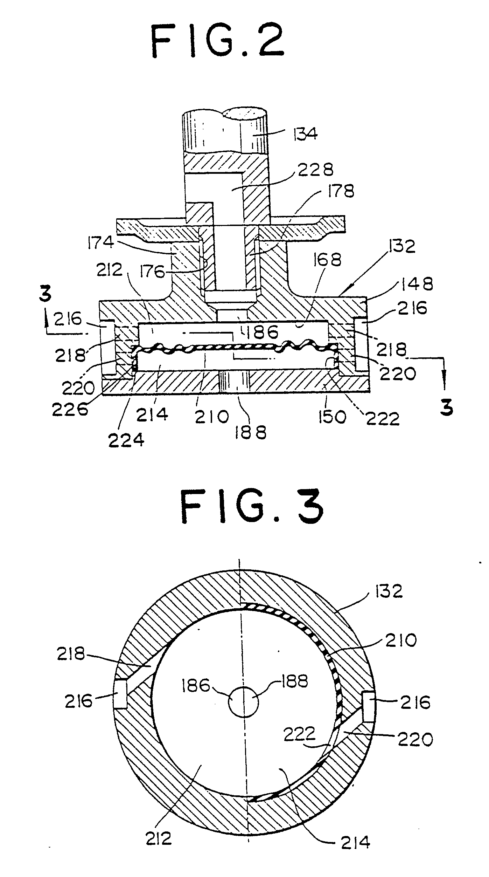

Figures 2 and 3 show details of the piston of a first embodiment of the present invention. The upper and lower members of the piston 148 and 150 in assembled position define the vortex chamber 168 in the piston 132. An elastic partitioning member 210 is disposed within the vortex chamber 168 to divide the vortex chamber 168 into the upper and lower sections 212 and 214. A pair of vertically-extending recesses 216 is formed on the periphery of the upper member 148. The recess 216 communicate with upper and lower sections 212 and 214 of the vortex chamber 168 via the vortex passages 218 and 220, respectively. As shown in Figure 30, the partitioning. member 210 is formed with tangentially-extending opening 222 on the vertical portion 224 thereof, which is located in an annular recess 226 formed on the inner circumferential periphery of the upper member 148.

The upper member 148 of the piston 132 is provided with the projecting portion 174 with a threaded bore 176. The threaded bore 176 communicates with the upper section 212 of the vortex chamber 168 via the vertical fluid passage 186. In turn, the vertical fluid passage 186 communicates with the upper fluid chamber (not clearly shown) via an angled duct 228 having a vertical section extending through the threaded portion 178 of the piston rod 134 and a horizontal section opening into the upper fluid chamber 144 at the periphery of the piston rod 134.

In the shown embodiment, the elastic partitioning member 210 is formed of an elastic rubber. However, this can be formed of any suitable material such as synthetic resin, spring steel and so on.

In operation, according to the fluid flow from the upper fluid chamber 144 to the lower fluid chamber 146 or from the lower fluid chamber 146 to the upper fluid chamber 144 via the vortex chamber 168, the partitioning member 210 is deformed due to the fluid pressure applied thereto to absorb the pressure. The partitioning member 210 deforms to the elastic limit thereof and works as a rigid partition after deformation to the elastical limit. Therefore, if the piston stroke in response to the shock applied is small, the pressure of fluid flow is absorbed by the partitioning member 210. In this case, the vortex produces no absorbing force against the shock. If the piston stroke is great enough to deform the partitioning member to the rigid state, the shock is absorbed by the function of the vortex.

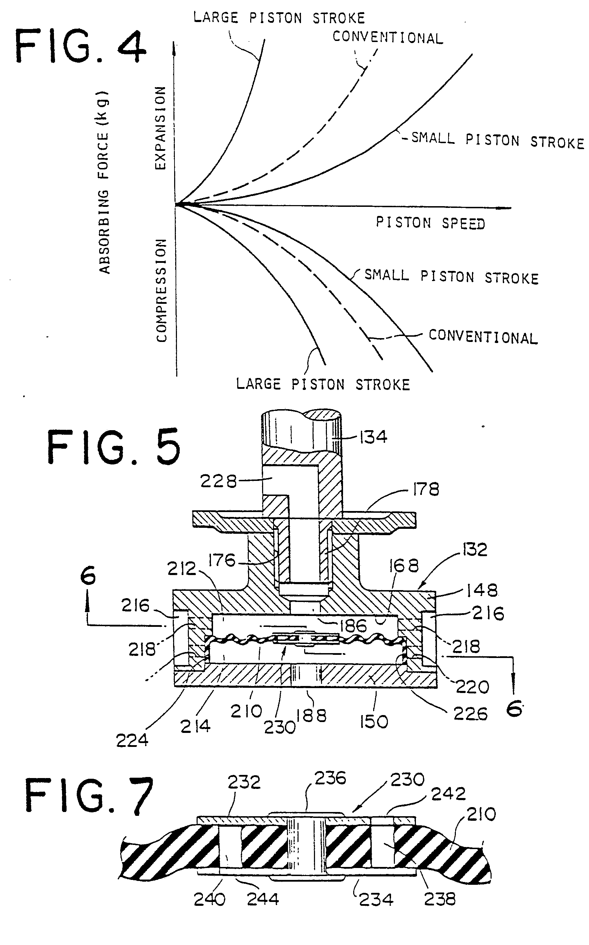

Figure 4 shows variation of the absorbing force produced by the foregoing shock absorber of Figures 1 to 3 with respect to the piston speed. As seen from Figure 4 the absorbing force depends on not only the piston speed but also the piston stroke.

Referring to Figures 5 to 7, there is illustrated a modification of the invention. Similarly to the foregoing embodiment the upper and lower members of the piston 148 and 150 in assembled position define the vortex chamber 168 in the piston 132. An elastic partitioning member 210 is disposed within the vortex chamber 168 to divide the vortex chamber 168 into the upper and lower sections 212 and 214. A pair of vertically-extending recesses 216 is formed on the periphery of the upper member 148. The recess 216 communicates with upper and lower sections 212 and 214 of the vortex chamber 168 via the passages 218 and 220, respectively. As shown in Figure 2, the partitioning member 210 is formed with tangentially-extending opening 222 on the vertical portion 224 thereof, which is located in an annular recess 226 formed on the inner periphery of the upper member 148.

The upper member 148 of the piston 132 is provided with a projecting portion 174 with a threaded bore 176. The threaded bore 176 communicates with the upper section 212 of the vortex chamber 168 via the vertical fluid passage 186. In turn, the vertical fluid passage 186 communicates with the upper fluid chamber (not clearly shown) via an angled duct 228 having a vertical section extending through the threaded portion 178 of the piston rod 134 and a horizontal section opening into the upper fluid chamber 144 at the periphery of the piston rod 134.

The partitioning member 210 is provided with a relief valve 230. The relief valve 230 comprises a pair of disc-shaped elastic plates 232 and 234 made of elastic material such as spring steel. The plates 232 and 234 are attached onto both surfaces of the partitioning member 210 with a fastening member 236 such as a rivet, in the central portion thereof. The partitioning member 210 is formed with a plurality of apertures 238 and 240 which extend vertically. The plate 232 is formed with a plurality of openings 242 in axial alignment with the openings 238. Likewise, the plate 234 is formed with a plurality of openings 244 in alignment with the opening 240. The plates 232 and 234 define a set pressure for the relief valve 230, maintaining the latter in a closed state until the fluid pressure applied thereto exceeds the set pressure.

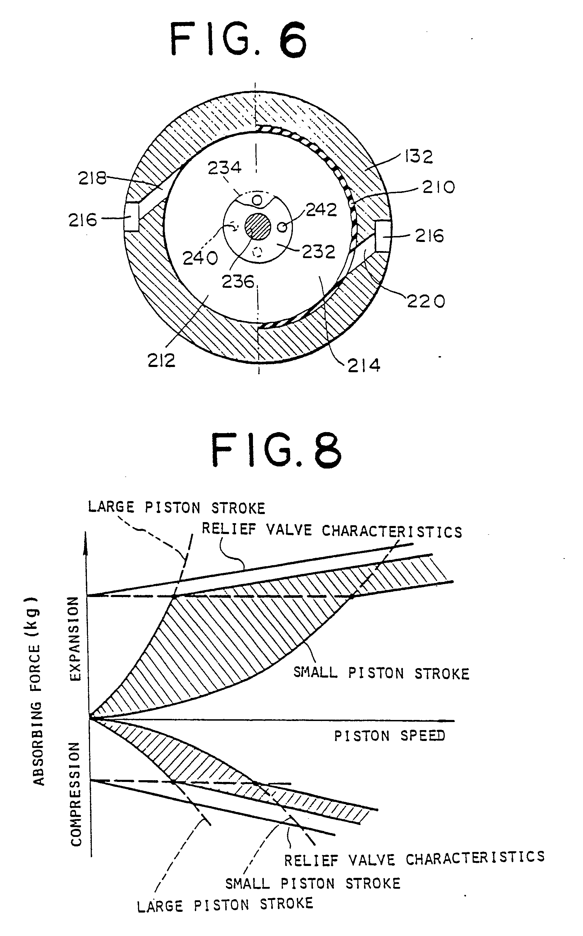

In operation, the partitioning member 210 serves to absorb the fluid flow in the vortex chamber as illustrated in foregoing embodiment of Figures 2 and 3. The relief valve 230 is normally in the closed state. The relief valve 230 opens to permit fluid flow therethrough when the fluid pressure in one of the section of the vortex chamber 168 becomes greater than that of the set value. Thus, the relief valve 230 prevents the shock absorber from producing excessive absorbing force, as shown in Figure 8. In Figure 8, the hatched area represents the range where ·the shock absorber works to absorb force depending on the piston stroke and the piston speed.

Thus, the invention fullfils all of the objects and advantages sought for the invention.

### Claims

1. A double-action vortex flow shock absorber comprising a hollow cylinder (130) filled with a working fluid, a piston.(132) including upper and lower members (148, 150) disposed within said cylinder for defining therein first and second chambers (144, 146), said piston further defining first and second vortex chambers (212, 214) therein, said first and second vortex chambers being in communication with each other via at least one first passage (218) and one second passage (220), said second passage (220) being adapted to produce a vortex pattern fluid flow in said second vortex chamber (214) while the fluid flows in first direction from said first chamber (144) to said second chamber (146), said first passage (218) being adapted to produce a vortex pattern fluid flow in the first vortex chamber (212) while the fluid flows in said second direction, said first passage (218) and said second passage (220) being connected by a recess (216) on the periphery of the piston, said first vortex chamber (212) being in communication with said first chamber (144) via a third passage (186) and said second vortex chamber (214) being in communication with said second chamber (146) via a fourth passage (188) characterized in that an elastically deformable partitioning member (210) is disposed within an internal space of said piston (132) for defining therein said first and second vortex chambers (212, 214), said partitioning member being effective on small piston strokes to absorb the fluid pressure differences generated between the first and second vortex chambers.

2. The shock absorber as set forth in Claim 1, characterized in that said partitioning member (210) is provided with a pressure relief means (230) for relieving fluid pressure in one of said first and second vortex chambers (212, 214) in which the fluid pressure is larger than in the other vortex chamber exceeding a preset value.

3. The shock absorber as set forth in Claim 2, characterized in that said pressure relief means comprises at least one relief passage (238, 240) and a fluid pressure responsive relief valve (232, 234) normally biased to close one end of said pressure relief passage.

4. The shock absorber as set forth in Claim 2, characterized in that said pressure relief means comprises first and second relief passages (238, 240) and first and second relief valves (232, 234), said first relief valve (234) being normally biased towards one end of said first relief passage (238) for normally blocking fluid communication between said first and second vortex chambers (212, 214) and responsive to the fluid pressure in said first vortex chamber (212) larger than that in said second vortex chamber (214) beyond a first set pressure to release from said one end of said first relief passage (238) for establishing fluid communication from said first vortex chamber (212) to said second vortex chamber (214), and said second relief valve (232) being normally biased towards the one end of said second relief passage (240) for normally blocking fluid communication between said first and second vortex chambers and responsive to the fluid pressure in said second vortex chamber (214) larger than that in said first vortex chamber (212) beyond a second set pressure to release from said one end of said second relief passage (240) for permitting fluid flow from said second vortex chamber to said first vortex chamber.

5. The shock absorber as set forth in Claim 4, characterized in that said first and second relief valves (232, 234) are fitted to said partitioning member (210) at opposite surfaces thereof with a common fastener (236).

### Patentansprüche

1. Doppeltwirkender Wirbelströmungs-Stoßdämpfer mit einem hohlen Zylinder (130), der mit einem Arbeitsfluid gefüllt ist, einem Kolben (132) mit oberen und unteren Teilen (148, 150) innerhalb des Zylinders zur Bildung einer ersten und zweiten Kammer (144, 146) in dem Zylinder, welcher Kolben erste und zweite Wirbelkammern (212, 214) enthält, die miteinander über wenigstens einen ersten Kanal (218) und einen zweiten Kanal (220) in Verbindung stehen, welcher zweite Kanal eine Wirbelströmung in der zweiten Wirbelkammer (214) erzeugt, während das Fluid in eine erste Richtung von der ersten Kammer (144) in die zweite Kammer (146) strömt, welcher erste Kanal (218) eine Wirbelströmung in der ersten Wirbelkammer (212) erzeugt, während das Fluid in eine zweite Richtung strömt, welche Kanäle (218, 220) mit einer Ausnehmung (216) auf dem Umfang des Koblens verbunden sind, welche erste Wirbelkammer (212) mit der ersten Kammer (144) über einen dritten Kanal (186) und welche zweite Wirbelkammer (214) mit der zweiten Kammer (146) über einen vierten Kanal (188) in Verbindung steht, dadurch gekennzeichnet, daß eine elastisch verformbare Trennwand (210) im Inneren des Kolben (132) angeordnet ist und in diesem die erste und zweite Wirbelkammer (212, 214) begrenzt, welche Trennwand auf kleine Kolbenhübe reagiert und den Druckunterschied des Fluids zwischen den Wirbelkammern absorbiert.

2. Stoßdämpfer nach Anspruch 1, dadurch gekennzeichnet, daß die Trennwand (210) ein Überdruckventil (230) zum Ablassen des Fluiddrucks in einer der Wirbelkammern (212, 214), in der der Fluiddruck über ein vorgegebenes Maß hinaus größer als in der anderen Wirbelkammer ist, umfaßt.

3. Stoßdämpfer nach Anspruch 2, dadurch gekennzeichnet, daß das Überdruckventil wenigstens einen Auslaßkanal (238, 240) und ein auf Fluiddruck ansprechendes Auslaßventil (232, 234) umfaßt, das normalerweise in eine ein Ende des Auslaßkanals verschließende Stellung vorgespannt ist.

4. Stoßdämpfer nach Anspruch 2, dadurch gekennzeichnet, daß das Überdruckventil erste und zweite Auslaßkanäle (238, 240) und erste und zweite Auslaßventile (232, 234) umfaßt, welches erste Auslaßventil (234) normalerweise gegen ein Ende des ersten Auslaßkanals (238) zur Blockierung einer Fluidverbindung zwischen der ersten und zweiten Wirbelkammer (212, 214) vorgespannt ist und auf einen Fluiddruck in der ersten Wirbelkammer (212) anspricht, der über ein vorgegebenes Maß hinaus größer als der Fluiddruck in der zweiten Wirbelkammer (214) ist, und das eine Ende des ersten Auslaßkanals (238) zur Herstellung einer Fluidverbindung zwischen der ersten Wirbelkammer (212) und der zweiten Wirbelkammer (214) freigibt, und daß das zweite Auslaßventil (232) normalerweise in Richtung eines Endes des zweiten Auslaßkanals (214) vorgespannt ist und eine Fluidverbindung zwischen der ersten und zweiten Wirbelkammer blockiert und auf den Fluiddruck in der zweiten Wirbelkammer (214) anspricht, wenn dieser über eine vorgegebenes Maß hinaus größer als der Druck in der ersten Wirbelkammer (212) ist, und das eine Ende des zweiten Auslaßkanals (240) zur Ermöglichung eines Fluidstroms von der zweiten Wirbelkammer in die erste Wirbelkammer freigibt.

5. Stoßdämpfer nach Anspruch 4, dadurch gekennzeichnet, daß das erste und zweite Auslaßventil (232, 234) an der Trennwand (210) auf gegenüberliegenden Oberflächen der Trennwand mit herkömmlichen Befestigungseinrichtungen (236) befestigt sind.

**Revendications**

1. Amortisseur de chocs à écoulement tourbillonnaire à double action comprenant un cylindre creux (130) rempli d'un fluide de travail, un piston (132) comprenant des organes supérieur et inférieur (148, 150), disposé dans ledit cylindre pour y définir des première et seconde chambres (144, 146), ledit piston y définissant de plus des première et seconde chambres de tourbillons (212, 214), lesdites première et seconde chambres de tourbillons étant en communication l'une avec l'autre via au moins au premier passage (218) et un second passage (220), ledit second passage (220) étant adapté à produire un écoulement de fluide en schéma tourbillonnaire dans ladite seconde chambre de tourbillons (214) tandis que le fluide s'écoule dans une première direction de ladite première chambre (144) à ladite seconde chambre (146), ledit premier passage (218) étant adapté à produire un écoulement du fluide selon un schéma tourbillonnaire dans la première chambre de tourbillons (212) tandis que le fluide s'écoule dans ladite seconde direction, ledit premier passage (218) et ledit second passage (220) étant connectés par un évidement (216) sur le pourtour du piston, ladite première chambre de tourbillons (212) étant en communication avec ladite première chamber (144) via un troisième passage (186) et ladite seconde chambre de tourbillons (214) étant en communication avec ladite seconde chambre (146) via un quatrième passage (188), caractérisé en ce qu'un organe de séparation élastiquement déformable (210) est disposé dans un espace interne dudit piston (132) pour y définir lesdites première et seconde chambres de tourbillons (212, 214), ledit organe de séparation étant effectif sur les petites courses du piston pour absorber les différences de pression de fluide produites entre les première et seconde chambres de tourbillons.

2. Amortisseur de chocs selon la revendication 1, caractérisé en ce que ledit organe de séparation (210) est pourvu d'un moyen formant détendeur de pression (230) pour détendre la pression du fluide dans l'une desdites première et seconde chambres de tourbillons (212, 214) où la pression du fluide est plus importante que dans l'autre chambre de tourbillons dépassant une valeur préétablie.

3. Amortisseur de chocs selon la revendication 2, caractérisé en ce que ledit moyen détendeur de pression comprend au moins un passage de détente (238, 240) et un détendeur de pression répondant à la pression du fluide (232, 234) normalement sollicité à fermer une extrémité dudit passage de détente de pression.

4. Amortisseur de chocs selon la revendication 2, caractérisé en ce que ledit moyen détendeur de pression comprend des premier et second passages de détente (238, 240) et des premier et second détendeurs de pression (232, 234), ledit premier d'étendeur (234) étant normalement sollicité vers une extrémité dudit premier passage de détente (238) pour bloquer normalement la communication de fluide entre les première et seconde chambres de tourbillons (212, 214) et répondant à la pression du fluide dans ladite première chambre de tourbillons (212), plus importante que dans ladite seconde chambre de tourbillons (214) au delà d'une première pression de consigne pour libérer de ladite première extrémité dudit premier passage de détente (338) pour établir une communication de fluide de ladite première chambre de tourbillons (212) à ladite seconde chambre de tourbillons (214) et ledit second détendeur de pression (232) étant normalement sollicité vers la première extrémité dudit second passage de détente (240) pour bloquer normalement la communication de fluide entre lesdites première et seconde chambres de tourbillons et répondant à la pression du fluide dans ladite seconde chambre de tourbillons (214) plus importante que dans ladite première chambre de tourbillons (212) au delà d'une seconde pression de consigne pour libérer de ladite première extrémité dudit second passage de détente (240) pour permettre un écoulement du fluide de ladite seconde chambre de tourbillons à ladite première chambre de tourbillons.

5. Amortisseur de chocs selon la revendication 4, caractérisé en ce que lesdits premier et second détendeurs de pression (232, 234) sont fixés audit organe de séparation (210) à ses surfaces opposées, par un moyen commun de fixation (236).

# FIG. I

# FIG.2

# FIG.3

# FIG. 4

LARGE PISTON STROKE

CONVENTIONAL

ABSORBING FORCE (kg)

EXPANSION

-SMALL PISTON STROKE

PISTON SPEED

COMPRESSION

SMALL PISTON STROKE

CONVENTIONAL

LARGE PISTON STROKE

# FIG. 5

134
228
178
212 176
168 132
148
216
216
186
218
218
220
224 214 210 230 188 150 226

6
6

# FIG. 7

232 236 230 242 210

240 244 234 238

3

# FIG. 6

# FIG.8